(19) **Europäisches Patentamt**

**European Patent Office**

**Office européen des brevets**

(11) **EP 1 132 812 B1**

(12) **EUROPEAN PATENT SPECIFICATION**

(45) Date of publication and mention
of the grant of the patent:
**26.04.2006 Bulletin 2006/17**

(51) Int Cl.:
*G06F 7/20* (2006.01)     *H04N 5/14* (2006.01)
*G06F 17/30* (2006.01)

(21) Application number: **01302080.5**

(22) Date of filing: **07.03.2001**

(54) **Method of detecting dissolve/fade in mpeg-compressed video environment**

Verfahren um Überblendung in einer MPEG-Umgebung zu detektieren

Procédé de détection de fondu-enchaîné dans un environnement MPEG

(84) Designated Contracting States:
**DE FR GB IT NL**

(30) Priority: **07.03.2000 KR 2000011334**

(43) Date of publication of application:
**12.09.2001 Bulletin 2001/37**

(73) Proprietor: **LG ELECTRONICS INC.**
**Seoul (KR)**

(72) Inventors:
• **Jun, Sung Bae**
**Seoul (KR)**
• **Yoon, Kyoung Ro**
**Kangnam-Ku,**
**Seoul (KR)**

(74) Representative: **McLeish, Nicholas Alistair**
**Maxwell et al**
**Boult Wade Tennant**
**Verulam Gardens**
**70 Gray's Inn Road**
**London WC1X 8BT (GB)**

(56) References cited:
**EP-A- 0 675 495         EP-A- 0 780 844**
**EP-A- 0 938 054**

• **MENG J ET AL: "SCENE CHANGE DETECTION IN A MPEG COMPRESSED VIDEO SEQUENCE" PROCEEDINGS OF THE SPIE, 7 February 1995 (1995-02-07), pages 14-25, XP000670965**

• **YU H H: "HIERARCHICAL MULTIRESOLUTION VIDEO SHOT TRANSITION DETECTION SCHEME" COMPUTER VISION AND IMAGE UNDERSTANDING,US,ACADEMIC PRESS, vol. 75, no. 1/02, July 1999 (1999-07), pages 196-213, XP000865326 ISSN: 1077-3142**

• **ALATTAR A M: "DETECTING AND COMPRESSING DISSOLVE REGIONS IN VIDEO SEQUENCES WITH A DVI MULTIMEDIA IMAGE COMPRESSION ALGORITHM" PROCEEDINGS OF THE INTERNATIONAL SYMPOSIUM ON CIRCUITS AND SYSTEMS. (ISCS),US,NEW YORK, IEEE, vol. -, 3 May 1993 (1993-05-03), pages 13-16, XP000409923 ISBN: 0-7803-1281-3**

• **ALATTAR A M: "WIPE SCENE CHANGE DETECTOR FOR USE WITH VIDEO COMPRESSION ALGORITHMS AND MPEG-7" IEEE TRANSACTIONS ON CONSUMER ELECTRONICS,IEEE INC. NEW YORK,US, vol. 44, no. 1, 1 February 1998 (1998-02-01), pages 43-51, XP000779249 ISSN: 0098-3063**

• **FENG JIAN ET AL: "Scene change detection algorithm for MPEG video sequence" PROCEEDINGS OF THE INTERNATIONAL CONFERENCE ON IMAGE PROCESSING (ICIP), US,NEW YORK, IEEE, 16 September 1996 (1996-09-16), pages 821-824, XP002132912 ISBN: 0-7803-3259-8**

• **LIU H -C H ET AL: "SCENE DECOMPOSITION OF MPEG COMPRESSED VIDEO" PROCEEDINGS OF THE SPIE, 7 February 1995 (1995-02-07), pages 26-37, XP000671108**

**Description**

**BACKGROUND OF THE INVENTION**

1. Field of the Invention

The present invention relates to a method of detecting dissolve/fade in an MPEG-compressed video environment, and more particularly, to a method of detecting a dissolve/fade sequence using spatio-temporal macro block type distribution in a compressed video environment, to effectively detect dissolve/fade in video streams, and to corresponding apparatus and computer program products.

2. Description of the Related Art

To watch a desired video (moving picture such as movie, drama, news, documentary, etc.) through TV and video media, a user should watch the entire program at a fixed televising time. With the development in digital technology and image/video recognition techniques in recent years, however, users can search and browse a desired part of a desired video at a desired time. A basic technique for non-linear browsing and searching includes a shot segmentation and a shot clustering. A variety of studies are being performed for the shot segmentation technique while researches with respect to the shot clustering technique are at the initial stage.

A shot is a sequence of video frames obtained by one camera without being interrupted. The shot is a basic unit for analyzing or constructing video content. Video is generally configured of a connection of lots of shots and various video editing effects are used according to methods of connecting the shots. The video editing effects include an abrupt shot transition and a gradual shot transition. The abrupt shot transition is a technique that the current picture is abruptly changed into another picture. This abrupt shot transition is also called hard cut and being prevalently used. The gradual shot transition is a technique that a picture is gradually changed into another picture such as fade, dissolve, wipe and other special effects. Among these, the fade and dissolve are most frequently used.

Shot segmentation represents a proccess of extracting temporal information, such as frame numbers, of each shot of a video based on the transition detection.

There are many shot transition detection algorithms which of each can be categorized as three conventional methods for detecting the gradual shot transition more effectively. The first one is a twin comparison technique based on a color histogram difference between frames. This technique has erroneous detection and nondetection and slower performance speed because it is based on only the global color histogram difference between frames. The second method is a dissolve/fade detection technique based on the variance of global brightness distribution of frame. This technique uses brightness variation characteristic in I-frames and P-frames of a fade/dissolve sequence and also uses facts that a brightness variance graph has a parabolic form and very large difference between the maximum and minimum values and the editing effect of dissolve or fade lasts over several to tens frames. However, the brightness variance distribution used as a basis for detecting the dissolve/fade effect in this method frequently appears even in a sequence where dissolve/fade is not generated. Moreover, it is not arise in the sequence where the dissolve/fade is generated in many cases.

The third method is a dissolve/fade detecting technique based on edge distribution in an image according to an edge detection algorithm and analysis of moving picture characteristic of the detected edge. This method passes through a preprocessing step of detecting edges from image data, a step of dividing the detected edges into entering edges and exiting edges using the moving picture characteristic and calculating an edge variation rate on the basis of the divided edges, and a post-processing step of classifying editing effects using spatio-temporal distribution of the entering edges and exiting edges, to detect the editing effects of hard cut, dissolve, fade and wipe. However, this method has very a slow performance speed because most images must be actually decoded basically and the edge detection operation requires relatively long period of time.

EP 0,780,844 A2, "Scene Change Detection in a MPEG Compressed Video Sequence" (Meng et al., Proceedings of the SPIE, 7 Feb 1995, page 14-25) and "A Hierarchical multi resolution video shot transition detection scheme" (Yu and Wolf, Computer Vision and Image Understanding, vol 75, nos 1/2, Jul/Aug 1999) all discuss ways of detecting dissolve/fade sequences in compressed video data.

**SUMMARY OF THE INVENTION**

It would therefore be desirable to provide a method of detecting dissolve/fade in an MPEG-compressed video environment, which rapidly and accurately detects a sequence where dissolve/fade is generated based on spatio-temporal macro block type distribution in a video compression domain using bi-directional prediction between frames.

Accordingly, the invention provides a method of detecting dissolve/fade in an MPEG-compressed video environment as set out in claim 1.

**BRIEF DESCRIPTION OF THE DRAWINGS**

FIG. 1 shows a non-linear video browsing interface according to an embodiment of the present invention;

FIG. 2 shows a relationship between the shot segmentation and shot clustering;

FIG. 3 shows an example of shot transition by dissolve in a video sequence ;

FIG. 4 shows the structure of GOP in an MPEG video sequence;

FIGS. 5A and 5B are graphs showing forward prediction rates in a dissolve/fade sequence and a non-dissolve/fade sequence in an MPEG video sequence; and

FIG. 6 shows distributions by macro block types in B-frames adjacent to anchor frames in a dissolve sequence.

**DETAILED DESCRIPTION OF THE PREFERRED EMBODIMENT**

Reference will now be made in detail to the preferred embodiments of the present invention, examples of which are illustrated in the accompanying drawings.

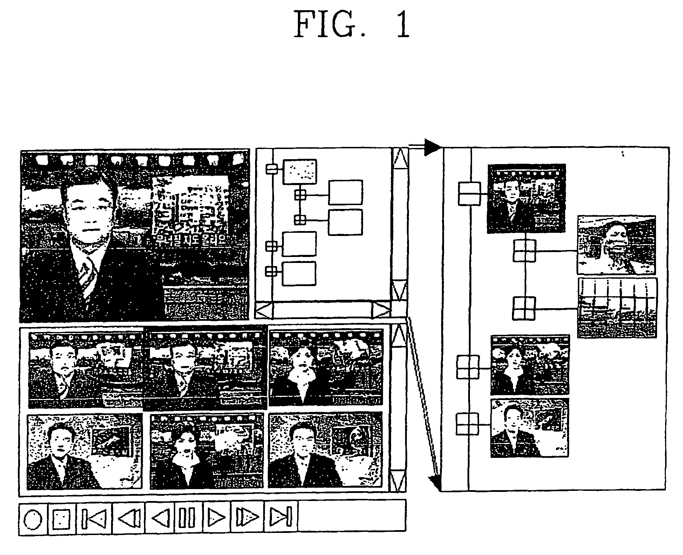

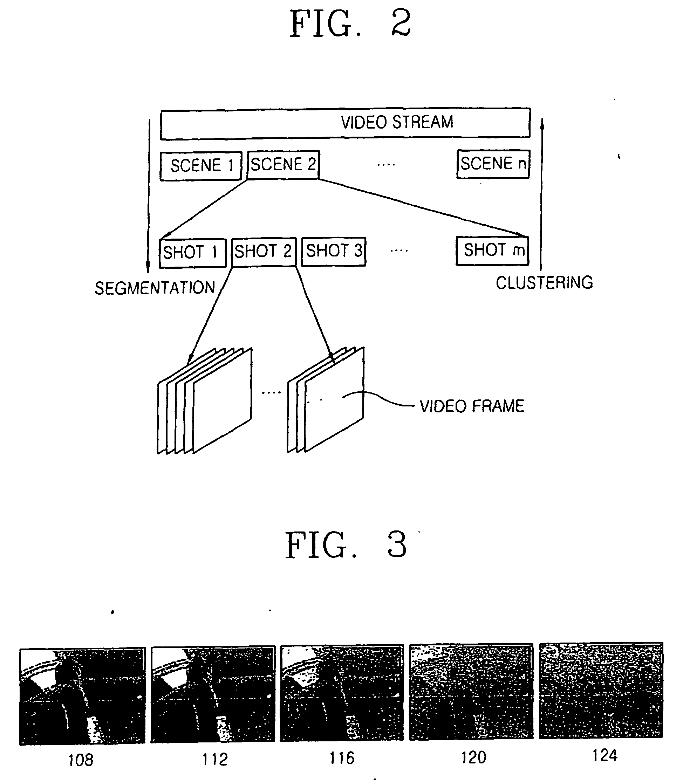

FIG. 1 shows a non-linear video browsing interface according to an embodiment of the present invention. This interface is very useful in digital video browsing because a user can easily access only a desired part of video by searching main parts thereof using the interface without watching the whole part of the video The most essential technique for video browsing includes the shot segmentation and shot clustering. The relationship between the shot segmentation and shot clustering is explained below with reference to FIG. 2.

FIG. 2 shows the relationship between the shot segmentation and shot clustering. Referring to FIG. 2, a video stream is configured of a connection of scenes logically constructed, each scene being configured of a connection of a lot of shots. The shot segmentation is a technique for dividing the video stream into individual shots. The shot clustering is a technique of grouping similar shots on the basis of similarity of time/image/motion/audio to construct a video structure in unit of logical scene.

A video editing effect is classified based on methods of connecting the shots. The editing effect includes the abrupt transition, that is, hard cut, and gradual transition such as dissolve, fade, wipe and other special effects. The dissolve and fade are most frequency used for gradual connection of two shots or scenes in video edition. The dissolve is a technique that two scenes are overlapped each other to be gradually changed from one scene to the other scene. The fade is a technique that a scene fades out or fades in, being gradually changed into another scene.

There is described below a method of detecting fade and dissolve using spatio-temporal macro block type distribution of a video MPEG-compressed according to bi-directional prediction between frames with reference to FIGS. 3 to 6. FIG. 3 shows an example of shot transition by dissolve in a video sequence. Referring to FIG. 3, as the video sequence proceeds, transition from one scene 108 into another scene 124 occurs, the two scenes being overlapped each other.

When the shot transition sequence detected using dissolve/fade is analyzed in the video, it has the following characteristics. Firstly, there is a considerable difference between color distributions of the starting scene and ending scene of the dissolve/fade. Secondly, the dissolve/fade generally lasts for more than several frames. Thirdly, the first scene gradually becomes dim and the second scene gradually becomes bright in the dissolve/fade. Finally, pixels that become dim and pixels that become bright spatially widely distribute. On the basis of these characteristics, the present invention realizes an algorithm for effectively detecting the dissolve/fade using spatio-temporal macro block type distribution characteristic in B-frames that simultaneously use bi-directional prediction in the compression domain.

A procedure for realizing the algorithm is as follows.

First of all, a candidate sequence that is presumed to use the dissolve/fade technique is detected from a video sequence through shot transition detection. This candidate sequence is judged to be a sequence where the dissolve/fade was generated when a color histogram difference between the first frame and the last frame of a scene where the dissolve/fade is detected is larger than a predetermined threshold. This can be represented by the following expression.

$$\text{HistDiff}(f_b, f_e) > \tau_{color} \quad \text{-------------------} (1)$$

Where $f_b$ is the starting frame of dissolve/fade scene, $f_e$ is the ending frame of the dissolve/fade scene, HistDiff $(f_b, f_e)$ is the color histogram difference between $f_b$ and $f_e$, and $\tau_{color}$ is the predetermined threshold for judgement of the generation of shot transition based on the color histogram difference.

The candidate sequence can be detected using not only a method of detecting the shot transition based on global color distribution difference between frames but also a method based on the spatio-temporal macro block distribution and a method based on spatio-temporal edge distribution and variation form characteristic. There are explained methods of detecting the frames $f_b$, $f_e$ serving as a base of color distribution comparison in the method using the color distribution difference. First of all, there is a method of selecting a frame of one-step interval from a reference frame. Another method is to detect I-frames as the candidate sequence ($[f_b, f_e]$) which uses only intra coded blocks in video CODEC such as H.xxx or MPEG.

It is judged if there is a hard cut in the dissolve/fade candidate sequence ($[f_b, f_e]$) detected as above. This can improve accuracy in the dissolve/fade detection algorithm. The hard cut is detected through a variety of methods including a technique using an image difference between two frames according to global color distribution difference based on color histogram, a technique using spatio-temporal macro block distribution and its variation characteristic and a technique using spatio-temporal motion vector characteristic, spatio-temporal edge distribution through edge detection and its variation characteristic.

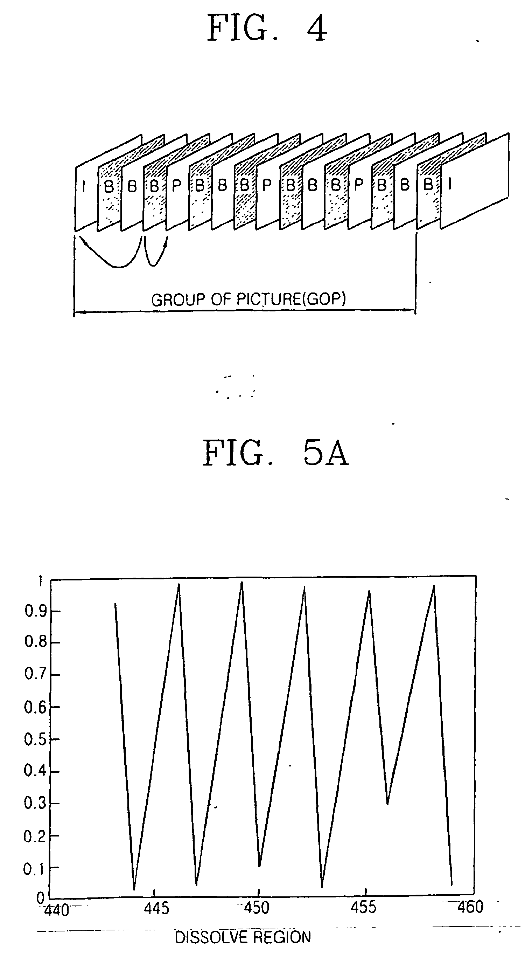

In case where it is judged that there is no hard cut, it is found if the dissolve/fade editing effect was used in the detected dissolve/fade candidate sequence ($[f_b, f_e]$) based on existence of spatio-temporal macro block type distribution that characteristically appears in dissolve/fade sequence. Checking of the spatio-temporal macro block type distribution is performed on B-frames that are coded using bi-directional prediction between frames. The selected B-frames are adjacent to anchor frames in the candidate sequence ($[f_b, f_e]$). The anchor frames are I-frames or P-frames serving as a base of motion prediction/compensation between frames. The above-described B-frames, I-frames and P-frames are explained below in detail with reference to FIG. 4.

FIG. 4 shows a structure of GOP (Group of Picture) in an MPEG video sequence. The GOP is one of specific MPEG video sequences. In FIG. 4, black-colored frames represent B-frames adjacent to anchor frames and these frames are accessed to detect the dissolve/fade in minimal decoding domain. The anchor frames serve as a base frame for prediction/motion compensation between frames, and the B-frame has two anchor frames all the time. In the present invention only the B-frames adjacent to anchor frames are accessed without accessing all of B-frames in order to minimize decoding, the dissolve/fade can be accurately detected.

To obtain a varied dissolve/fade candidate sequence ($[f_{b'}, f_{e'}]$) in the candidate sequence ($[f_b, f_e]$) that satisfies the spatio-temporal macro block distribution characteristic of the dissolve/fade sequence.

The larger value between forward prediction rate and backward prediction rate is larger than a predetermined critical value. This is represented by the following expressions.

$$\text{Max}(M_{fwd}/(M_{fwd} + M_{bwd}), / M_{bwd}(M_{fwd} + M_{bwd})) \quad \text{------------} (2)$$

$$(\text{if } M_{fwd} + M_{bwd} \neq 0)$$

$$\text{SpatDist}(\text{MinType}(M_{fwd}, M_{bwd})) > \tau_s \quad \text{------------------} (3)$$

$$(\text{if } M_{fwd} + M_{bwd} = 0)$$

$$\text{MinType}(M_X, M_Y) = X \quad (\text{if } M_X < M_Y) \quad \text{------------------} (4)$$

$$MinType(M_x, M_y) = Y \quad (if\ M_x > M_y) \quad \text{------------------} \quad (5)$$

Where $M_{fwd}$ is the number of forward prediction macro blocks of frame, $M_{bwd}$ is the number of backward prediction macro blocks of frame, $\tau_r$ is the critical value for the ratio of forward prediction and backward prediction, $M_{fwd}/(M_{fwd} + M_{bwd})$ is the forward prediction rate, $M_{bwd}(M_{fwd} + M_{bwd})$ is the backward prediction rate, SpatDist(A) is spatial distribution measurement function of macro blocks whose type is A in an image, and $\tau_s$ is a critical value for the spatial distribution measurement of macro blocks. If a B-frame in the candidate sequence satisfies (2) or (3), the B-frame will be set to 1.

After the aforementioned procedure, there is detected the candidate sequence ($[f_{b'}, f_{e'}]$) having the maximum length among runs set to among the B-frames adjacent to the anchor frames within the obtained sequence ($[f_b, f_e]$).

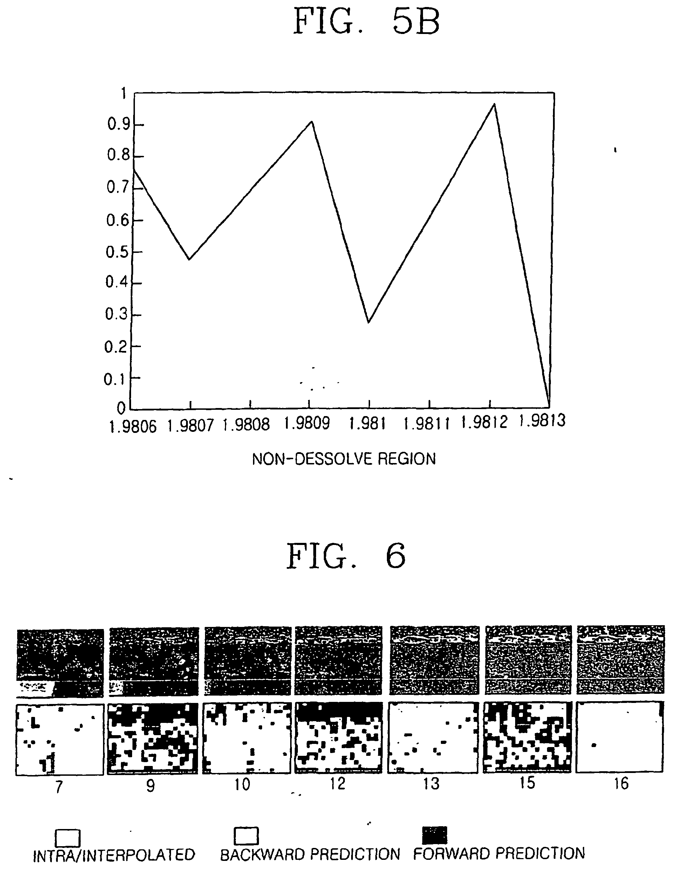

When the larger value between the forward prediction rate and backward prediction rate is larger than the specific threshold (expression (2)), the forward or backward prediction rate is considerably high in the B-frames adjacent to the anchor frames in the dissolve/fade sequence. The expressions model that this phenomenon continuously appears in the dissolve sequence. Moreover, the above expressions use characteristics that macro block prediction rate is much higher and appears continuously in the dissolve/fade sequence although it is general that more macro blocks are predicted from closer anchor frames in the B-frames. These characteristics are represented by graphs of FIGS. 5A and 5B. FIGS. 5A and 5B are graphs showing forward prediction rates in a dissolve/fade sequence and a non-dissolve/fade sequence in an MPEG video sequence respectively.

The expression (3) represents the forward prediction macro blocks and backward prediction macro blocks are globally scattered in the spatial domain. The expression is for reducing erroneous detection rate in the entire algorithm.

The spatial distribution measurement function is a method of judging how much a specific type macro block is spatially globally distributed in an image. As an example, SpatDist(A) for measuring spatial distribution of A-type macro block can be represented by the following expression.

$$SpatDist(A) = C_A/T_A \quad \text{----------------------} \quad (6)$$

Where $C_A$ is the total number of connected components on the basis of type A. and $T_A$ is the total number of A-type macro blocks in an image.

FIG. 6 shows distributions of macro block types in B-frames adjacent to the anchor frame in a dissolve sequence. The function that induces the forward prediction macro block and backward prediction macro block to globally scattered in the spatial domain is the spatial distribution measurement function that judges that macro blocks of two types globally scattered in the image. This function has higher value as the macro blocks of two types are more globally distributed. The spatial distribution measurement function is decided by a value obtained by dividing the number of connected components of a specific type macro block by the number of a specific type macro block in an image.

In the analysis of the spatial distribution measurement, a macro block type in smaller numbers is selected but, if required, a macro block type in larger numbers can be selected for checking the spatial distribution.

After passing through the above procedures, the dissolve/fade detecting algorithm using the spatio-temporal macro block type distribution applies time constraint in order to judge if corresponding candidate sequence is an actual scene transition sequence according to dissolve/fade. That is, the corresponding sequence is judged to be the scene transition sequence by dissolve/fade when the spatio-temporal characteristic of the macro block type distribution in B-frames continuously appears for a predetermined period of time in the dissolve/fade sequence continuously appears for a predetermined period of time. On the other hand, it is judged that the corresponding sequence is not the scene transition sequence by dissolve/fade when it is not. The length of the dissolve/fade candidate sequence ($[f_b, f_e]$ or $[f_{b'}, f_{e'}]$) having the maximum length, which was detected through the above procedure, is compared with a specific threshold($\tau_t$). When the length is larger than the threshold value, this sequence ($[f_b, f_e]$ or $[f_{b'}, f_{e'}]$) is decided as the dissolve/fade sequence, thereby detecting dissolve/fade. This is represented by the following expression.

$$[e'-b'] = \tau_t \quad \text{--------------------------} \quad (7)$$

where $\tau_t$ is a modeled duration.

Futhermore, when variance of colors of the first scene of the dissolve/fade candidate sequence obtained through the above procedures is lower than a predetermined critical value, the sequence is judged to be fade-in. When variance of colors of its last scene is lower than the critical value, the sequence is judged to be fade-out. The sequence is judged to be dissolve in other cases. Accordingly, the dissolve and fade can be discriminated from each other by the following expressions.

$$\text{if ColorDist}(f_{start}) < \tau_d \text{ then } \quad \text{Fade-In}$$

$$\text{else if ColorDist}(f_{end}) < \tau_d \text{ then } \quad \text{Fade-Out}$$

$$\text{else } \quad \text{dissolve}$$

ColorDist($f_1$) is a measure for indicating how various colors compose the image of frame $f_1$ and it can be applied to only pixels that are sampled on the specific basis. In the above expressions, $\tau_d$ is a threshold for deciding fade-in and fade-out, $f_{start}$ is the starting point of time of dissolve/fade, and $f_{end}$ is the ending point of time of dissolve/fade. $f_{start}$ can use $f_b$ or $f_{b'}$, and $f_{end}$ can use $f_e$ or $f_{e'}$. The above expressions use a characteristic that a picture starts from a simple scene in fade-in and the picture becomes simple in fade-out.

As distinguished from the conventional algorithm of detecting dissolve/fade, the present invention detects the dissolve/fade using the spatio-temporal macro block type distribution and its variation form in B-frames that compensate motions and perform bi-directional prediction in minimal decoding domain.

A dissolve/fade detecting method embodying the invention has a performance speed higher than the conventional algorithm because its processing is carried out in the minimal decoding domain. Furthermore, it is robust against fast camera motions or large motion information of a large object. Moreover, the embodiment provides an algorithm capable of rapidly and accurately detecting fade/dissolve effects widely used among the gradual shot transition in the shot segmentation field. This algorithm uses basic features used in the shot segmentation algorithm so that it can be easily combined with the conventional shot segmentation algorithm. Also, it can be used as a basic input for shot clustering.

Although specific embodiments including the preferred embodiment have been illustrated and described, it will be obvious to those skilled in the art that various modifications may be made without departing from the scope of the present invention,

**Claims**

1. A method of detecting dissolve/fade in an MPEG-compressed video environment, comprising the steps of:

   detecting a candidate sequence that is presumed to use a dissolve/fade editing effect according to shot transition detection in a video sequence;

   **characterised in**:

   establishing in which bi-directional prediction B-frames adjacent to anchor frames, within the candidate sequence, there are spatio-temporal macro block type distributions that characteristically appear in a dissolve/fade sequence; and
   when the established B-frames appear continuous within the series of B-frames adjacent to the anchor frames of the candidate sequence, comparing the length of the part of the candidate sequence containing the continuous appearing established B-frames with a predetermined critical value; and
   judging that the candidate sequence is a dissolve/fade sequence when the length is longer than the critical value.

2. The method of claim 1, wherein it is judged that there is a hard cut in the detected candidate sequence and, only when there is no hard cut, the process goes to the next step.

3. The method as claimed in claim 1, wherein the candidate sequence is judged to be the dissolve/fade sequence when a color histogram difference between the first frame and the last frame of a scene from which dissolve/fade is detected is larger than a predetermined threshold.

4. The method as claimed in claim 3, wherein frames serving as a base for comparison of global color distributions are selected by a method of selecting a frame of one-step interval from a reference frame, or selecting I-frames coded using only intra-coded blocks as candidate frames.

5. The method as claimed in claim 1, wherein the step of detecting the dissolve/fade candidate sequence is performed by a technique of using an image difference between two frames by using a difference in color histogram, a technique of using spatio-temporal macro block distribution, a technique of using spatio-temporal motion vector distribution, or a technique of using spatio-temporal edge distribution and its variation characteristic.

6. The method as claimed in claim 2, wherein the hard cut is detected by a method of using an image difference between two frames by using a difference in color histogram based global color distribution, a method of using spatio-temporal macro block distribution, a method of using spatio-temporal motion vector distribution, or a method of using spatio-temporal edge distribution and its variation form characteristics.

7. The method as claimed in claim 1, wherein the anchor frames are I-frames or P-frames serving as a base for motion prediction/compensation between frames.

8. The method as claimed in claim 1, wherein the step of judging if the dissolve/fade editing effect was used in the candidate sequence using the spatio-temporal macro block type distribution comprises the steps of:

setting to 1 a variable for B-frames having a said spatio-temporal macro block type distribution characteristically appearing in a dissolve/fade sequence among the B-frames adjacent to the anchor frames in the dissolve/fade candidate sequence, and setting other B-frames to 0; and
obtaining a run having a maximum length among the runs of variables set to 1.

9. The method as claimed in claim 8, wherein a spatio-temporal macro block type distribution characteristically appearing in a dissolve/fade sequence is that the sum of the number of forward prediction macro blocks and the number of backward prediction macro blocks in corresponding B-frame is not equal to 0 and a larger value between forward prediction rate and backward prediction rate is larger than a threshold.

10. The method as claimed in claim 8, wherein a spatio-temporal macro block type distribution characteristically appearing in a dissolve/fade sequence is that one of the number of forward prediction macro blocks and the number of backward prediction macro blocks in corresponding a B-frame is 0 or both are not equal to 0, and the forward prediction macro blocks and backward prediction macro blocks are globally scattered in the spatial domain according to a spatial distribution measurement function.

11. The method as claimed in claim 10, wherein the spatial distribution measurement function inputs the number of connected components of a specific type macro block and the number of specific type macro blocks in an image, and it is decided by a value obtained by dividing the inputted number of connected components by the inputted number of the specific type macro blocks in the image.

12. The method as claimed in claim 10, wherein the spatial distribution measurement function, for judging that macro blocks of two types are globally scattered in the image of an image type macro block, has a higher value as the macro blocks of two types are more globally scattered, and it is judged that the corresponding B-frame satisfies a spatio-temporal macro block type distribution characteristically appearing in a dissolve/fade sequence when the result of the function exceeds a threshold for the spatial distribution of the macro blocks.

13. The method as claimed in claim 10, wherein the spatial distribution measurement function selects a type in smaller numbers among the forward macro blocks and backward macro blocks to use it as an input, or selects a type in larger numbers among them to use it as an input.

14. The method as claimed in claim 1, wherein the dissolve/fade candidate sequence is judged to be fade-in when variance of colors for the first scene in the candidate sequence is lower than a predetermined threshold, it is judged to be fade-out when variance of colors for the last scene is lower than a threshold for discriminating fade-in and fade-out from each other, and it is judged to be dissolve in other cases.

15. The method as claimed in claim 14, wherein the variance of colors is based on diversity of colors constructing pixels in an image while brightness is based on diversity of colors constructing sampled pixels among pixels in an image.

16. Apparatus comprising means adapted to carry out the steps of a method according to any preceding claim.

17. A computer program product comprising software elements adapted to carry out the steps of a method according to any of claims 1 to 15.

**Revendications**

1. Procédé de détection de fondu enchaîné/fondu dans un environnement vidéo compressé par MPEG, comprenant les étapes de :

   détection d'une séquence candidate qui est supposée utiliser un effet de montage de fondu enchaîné/fondu selon la détection d'une transition de plan dans une séquence vidéo ;

   **caractérisé par** :

   l'établissement des trames B de prévision bidirectionnelles adjacentes à des trames d'ancrage, dans la séquence candidate, dans lesquelles il existe des distributions spatio-temporelles de types de blocs de macros qui apparaissent de manière caractéristique dans une séquence de fondus enchaînés/fondus ; et
   lorsque les images B établies apparaissent en permanence dans la série de trames B adjacentes aux trames d'ancrage de la séquence candidate, la comparaison de la longueur de la partie de la séquence candidate contenant les trames B établies apparaissant en permanence avec une valeur critique prédéterminée ; et
   l'estimation que la séquence candidate est une séquence de fondus enchaînés/fondus lorsque la longueur est supérieure à la valeur critique.

2. Procédé selon la revendication 1, dans lequel il est estimé qu'il existe une coupure franche dans la séquence candidate détectée et, seulement lorsqu'il n'existe aucune coupure franche, le processus se poursuit à l'étape suivante.

3. Procédé selon la revendication 1, dans lequel la séquence candidate est estimée être la séquence de fondus enchaînés/fondus lorsqu'une différence d'histogramme de couleurs entre la première trame et la dernière trame d'une scène à partir de laquelle un fondu enchaîné/fondu est détecté, est supérieure à un seuil prédéterminé.

4. Procédé selon la revendication 3, dans lequel des trames servant de base pour la comparaison de distributions de couleurs universelles sont sélectionnées par un procédé de sélection d'une trame d'intervalle à un stade à partir d'une trame de référence, ou de sélection de trames I codées en utilisant seulement des blocs codés en interne en tant que trames candidates.

5. Procédé selon la revendication 1, dans lequel l'étape de détection de la séquence candidate de fondus enchaînés/fondus est réalisée par une technique d'utilisation d'une différence d'images entre deux trames à l'aide d'une différence dans un histogramme de couleurs, une technique d'utilisation de distribution spatio-temporelle de blocs de macros, une technique d'utilisation de distribution spatio-temporelle de vecteurs de mouvement ou une technique d'utilisation de distribution spatio-temporelle de bordures et sa caractéristique de variation.

6. Procédé selon la revendication 2 dans lequel la coupure franche est détectée par un procédé d'utilisation d'une différence d'une différence d'images entre deux trames à l'aide d'une différence dans une distribution de couleurs universelle basée sur un histogramme de couleurs, un procédé d'utilisation de distribution spatio-temporelle de blocs de macros, un procédé d'utilisation de distribution spatio-temporelle de vecteurs de mouvement ou une technique d'utilisation de distribution spatio-temporelle de bordures et ses caractéristiques de formes de variation.

7. Procédé selon la revendication 1, dans lequel les trames d'ancrage sont des trames I ou des trames P servant de base pour une compensation/prévision de mouvement entre des trames.

8. Procédé selon la revendication 1, dans lequel l'étape d'estimation de l'utilisation de l'effet de montage de fondu enchaîné/fondu dans la séquence candidate à l'aide de la distribution spatio-temporelle de types de blocs de macros comprend les étapes de :

   réglage à 1 d'une variable pour des trames B ayant une dite distribution spatio-temporelle de types de blocs de macros apparaissant de manière caractéristique dans une séquence de fondus enchaînés/fondus parmi les trames B adjacentes aux trames d'ancrage dans la séquence candidate de fondus enchaînés/fondus, et réglage d'autres trames B à 0 ; et

obtention d'une passe ayant une longueur maximale parmi les passes de variables fixées à 1.

9. Procédé selon la revendication 8, dans lequel une distribution spatio-temporelle de types de blocs de macros apparaissant de manière caractéristique dans une séquence de fondus enchaînés/fondus est telle que la somme du nombre de blocs de macros de prévision par avance et du nombre de blocs de macros de prévision par régression dans une trame B correspondante n'est pas égale à 0 et qu'une valeur plus importante entre un taux de prévision par avance et un taux de prévision par régression est supérieure à un seuil.

10. Procédé selon la revendication 8, dans lequel une distribution spatio-temporelle de types de blocs de macros apparaissant de manière caractéristique dans une séquence de fondus enchaînés/fondus est telle qu'un des blocs de macros de prévision par avance et le nombre de blocs de macros de prévision par régression dans une trame B correspondante sont égaux à 0 ou les deux ne sont pas égaux à 0, et les blocs de macros de prévision par avance et les blocs de macros de prévision par régression sont dispersés universellement dans le domaine spatial selon une fonction de mesure de distribution spatiale.

11. Procédé selon la revendication 10, dans lequel la fonction de mesure de distribution spatiale entre le nombre de composants connectés d'un bloc de macro de type spécifique et le nombre de blocs de macros de type spécifique dans une image, et il est déterminé par une valeur obtenue en divisant le nombre entré de composants connectés par le nombre entré des blocs de macros de type spécifique dans l'image.

12. Procédé selon la revendication 10, dans lequel la fonction de mesure de distribution spatiale, pour estimer que des blocs de macros de deux types sont dispersés universellement dans l'image d'un bloc de macro de type d'image, a une valeur supérieure alors que les blocs de macros de deux types sont dispersés plus universellement, et il est estimé que la trame B correspondante satisfait à une distribution spatio-temporelle de types de blocs de macros apparaissant de manière caractéristique dans une séquence de fondus enchaînés/fondus lorsque le résultat de la fonction dépasse un seuil pour la distribution spatiale des blocs de macros.

13. Procédé selon la revendication 10, dans lequel la fonction de mesure de distribution spatiale sélectionne un type en petits nombres parmi les blocs de macros par avance et les blocs de macros par régression pour l'utiliser en tant qu'entrée, ou sélectionne un type en nombres plus importants parmi eux pour l'utiliser en tant qu'entrée.

14. Procédé selon la revendication 1, dans lequel la séquence candidate de fondus enchaînés/fondus est estimée être ouverte en fondu lorsqu'une variation de couleurs pour la première scène dans la séquence candidate est inférieure à un seuil prédéterminé, elle est estimée être fermée en fondu lorsqu'une variation de couleurs pour la dernière scène est inférieure à un seuil de discrimination d'ouvertures en fondu et de fermetures en fondu les unes des autres, et elle est estimée être fondue enchaînée dans d'autres cas.

15. Procédé selon la revendication 14, dans lequel la variation de couleurs se base sur une diversité de couleurs composant des pixels dans une image tandis que la luminosité se base sur une diversité de couleurs composant des pixels échantillonnés parmi des pixels dans une image.

16. Appareil comprenant des moyens adaptés pour exécuter les étapes d'un procédé selon une revendication précédente quelconque.

17. Produit programme informatique comprenant des éléments logiciels adaptés pour exécuter les étapes d'un procédé selon l'une quelconque des revendications 1 à 15.

**Patentansprüche**

1. Verfahren zur Detektion eines Überblendens/Ein- und Ausblendens in einer MPEGkomprimierten Videoumgebung, das die folgenden Schritte umfasst:

Detektieren einer Kandidatensequenz, von der angenommen wird, dass sie einen Überblend/Ein- und Ausblend-Bearbeitungseffekt verwendet, gemäß einer Einstellungsübergangsdetektion in einer Videosequenz;

**gekennzeichnet durch**:

Ermitteln in welchen B-Bildern bidirektionaler Vorhersage neben Ankerbildern innerhalb der Kandidatensequenz es räumlich-zeitliche Makroblocktypverteilungen gibt, die charakteristisch in einer Überblend/Ein- und Ausblend-Sequenz auftauchen; und

wenn die ermittelten B-Bilder kontinuierlich innerhalb der Serie von B-Bildern neben den Ankerbildern der Kandidatensequenz auftauchen, Vergleichen der Länge des Teils der Kandidatensequenz, der die kontinuierlich auftauchenden, ermittelten B-Bilder enthält, mit einem vorbestimmten kritischen Wert; und

Beurteilen, dass die Kandidatensequenz eine Überblend/Ein- und Ausblend-Sequenz ist, wenn die Länge länger als der kritische Wert ist.

2. Verfahren nach Anspruch 1, wobei beurteilt wird, dass ein harter Schnitt in der detektierten Kandidatensequenz vorhanden ist, und nur dann, wenn kein harter Schnitt vorhanden ist, das Verfahren zum nächsten Schritt geht.

3. Verfahren nach Anspruch 1, wobei beurteilt wird, dass die Kandidatensequenz die Überblend/Ein- und Ausblendsequenz ist, wenn eine Farbhistogrammdifferenz zwischen dem ersten Bild und dem letzten Bild einer Szene, bei der ein Überblenden/Ein- und Ausblenden detektiert wurde, größer als ein vorbestimmter Schwellwert ist.

4. Verfahren nach Anspruch 3, wobei die Bilder, die als eine Basis für das Vergleichen der globalen Farbverteilungen dienen, durch ein Verfahren der Auswahl eines Bilder eines Einschrittintervalls von einem Referenzbild oder der Auswahl von I-Bildern, die unter Verwendung von nur intrakodierten Blöcken kodiert wurden, als Kandidatenbilder ausgewählt werden.

5. Verfahren nach Anspruch 1, wobei der Schritt der Detektion der Überblend/Ein- und Ausblend-Kandidatensequenz durch eine Technik ausgeführt wird, die eine Bilddifferenz zwischen zwei Bildern verwendet durch das Verwenden einer Differenz im Farbhistogramm, einer Technik der Verwendung eine räumlich-zeitliche Makroblockverteilung, einer Technik der Verwendung einer räumlich-zeitlichen Bewegungsvektorverteilung oder einer Technik der Verwendung einer räumlich-zeitlichen Kantenverteilung und ihrer Variationscharakteristik.

6. Verfahren nach Anspruch 2, wobei der harte Schnitt durch ein Verfahren der Verwendung einer Bilddifferenz zwischen zwei Bildern durch das Verwenden einer Differenz im Farbhistogramm auf der Basis der globalen Farbverteilung, ein Verfahren der Verwendung einer räumlich-zeitlichen Makroblockverteilung, ein Verfahren der Verwendung einer räumlich-zeitlichen Bewegungsvektorverteilung oder ein Verfahren der Verwendung einer räumlich-zeitlichen Kantenverteilung und ihren Variationsformeigenschaften, detektiert wird.

7. Verfahren nach Anspruch 1, wobei die Ankerbilder I-Bilder oder P-Bilder sind, die als eine Basis für die Bewegungsvorhersage/Kompensation zwischen Bildern dienen.

8. Verfahren nach Anspruch 1, wobei der Schritt der Beurteilung, ob der Überblend/Ein- und Ausblend-Bearbeitungseffekt in der Kandidatensequenz verwendet wurde, unter Verwendung der räumlich-zeitlichen Makroblocktypverteilung folgende Schritte umfasst:

Setzen einer Variable auf 1 für B-Bilder, die diese räumlich-zeitliche Makroblocktypverteilung aufweisen, die charakteristisch in einer Überblend/Ein- und Ausblend-Sequenz auftaucht unter B-Bildern neben den Ankerbildern in der Überblend/Ein- und Ausblend-Kandidatensequenz, und Setzen der anderen B-Bilder auf 0; und Erhalten eines Laufs (run), der eine maximale Länge aufweist, unter den Läufen der Variablen, die auf 1 gesetzt sind.

9. Verfahren nach Anspruch 8, wobei eine räumlich-zeitliche Makroblocktypverteilung, die charakteristisch in einer Überblend/Ein- und Ausblend-Sequenz auftaucht, so ist, dass die Summe der Anzahl der Vorwärtsvorhersage-Makroblöcke und der Anzahl der Rückwärtsvorhersage-Makroblöcke in einem entsprechenden B-Bild nicht gleich 0 ist, und ein größerer Wert zwischen der Vorwärtsvorhersagerate und einer Rückwärtsvorhersagerate größer als ein Schwellwert ist.

10. Verfahren nach Anspruch 8, wobei eine räumlich-zeitliche Makroblocktypverteilung, die charakteristisch in einer Überblend/Ein- und Ausblend-Sequenz auftaucht, so ist, dass einer der Anzahl der Vorwärtsvorhersage-Makroblöcke und der Anzahl der Rückwärtsvorhersage-Makroblöcke in einem entsprechenden B-Bild 0 ist oder dass beide nicht 0 sind, und die Vorwärtsvorhersage-Makroblöcke und die Rückwärtsvorhersage-Makroblöcke global im räumlichen Bereich gemäß einer räumlichen Verteilungsmessfunktion verstreut sind.

**11.** Verfahren nach Anspruch 10, wobei die räumliche Verteilungsmessfunktion die Anzahl der verbundenen Komponenten eines Makroblocks eines spezifischen Typs und die Anzahl der Makroblöcke spezifischen Typs in ein Bild eingibt, und dies entschieden wird durch einen Wert, den man durch das Teilen der eingegebenen Anzahl der verbundenen Komponenten durch die eingegebene Anzahl der Makroblöcke spezifischen Typs in das Bild erhält.

**12.** Verfahren nach Anspruch 10, wobei die räumliche Verteilungsmessfunktion für die Beurteilung, dass Makroblöcke der zwei Typen global im Bild eines Makroblocks vom Bildtyp verstreut sind, einen höheren Wert aufweist, wenn die Makroblöcke der zwei Typen globaler verstreut sind, und es beurteilt wird, dass das entsprechende B-Bild eine räumlich-zeitliche Makroblocktypverteilung erfüllt, die charakteristisch in einer Überblend/Ein- und Ausblendsequenz auftaucht, wenn das Ergebnis der Funktion einen Schwellwert für die räumliche Verteilung der Makroblöcke überschreitet.

**13.** Verfahren nach Anspruch 10, wobei die räumliche Verteilungsmessfunktion einen Typ in kleineren Mengen unter den Vorwärtsmakroblöcken und den Rückwärtsmakroblöcken auswählt, um ihn als ein Eingabe zu verwenden, oder einen Typ in größeren Mengen unter ihnen auswählt, um ihn als Eingabe zu verwenden.

**14.** Verfahren nach Anspruch 1, wobei beurteilt wird, dass die Überblend/Ein- und Ausblend-Kandidatensequenz ein Einblenden darstellt, wenn die Varianz der Farben für die erste Szene in der Kandidatensequenz niedriger als ein vorbestimmter Schwellwert ist, beurteilt wird, dass sie ein Ausblenden ist, wenn die Varianz der Farben der letzten Szene niedriger als ein Schwellwert für das Unterscheiden des Einblendens und des Ausblendens ist, und sie in den anderen Fällen als ein Überblenden angesehen wird.

**15.** Verfahren nach Anspruch 14, wobei die Varianz der Farben auf der Verschiedenheit (diversity) der Farben, die die Pixel in einem Bild bilden, basiert, während die Helligkeit auf der Verschiedenheit der Farben, die abgetastete Pixel unter Pixeln in einem Bild bilden, basiert.

**16.** Vorrichtung, die Mittel umfasst, die ausgelegt sind, um die Schritte eines Verfahrens gemäß jedem vorhergehenden Anspruch auszuführen.

**17.** Computerprogrammprodukt, das Softwareelemente umfasst, die ausgelegt sind, um die Schritte eines Verfahrens gemäß jedem der Ansprüche 1 bis 15 auszuführen

# FIG. 1

# FIG. 2

VIDEO STREAM

SCENE 1  SCENE 2  ....  SCENE n

SHOT 1  SHOT 2  SHOT 3  ....  SHOT m

SEGMENTATION          CLUSTERING

VIDEO FRAME

# FIG. 3

108          112          116          120          124

# FIG. 4

GROUP OF PICTURE(GOP)

# FIG. 5A

DISSOLVE REGION

# FIG. 5B

NON-DESSOLVE REGION

# FIG. 6

INTRA/INTERPOLATED    BACKWARD PREDICTION    FORWARD PREDICTION